# EUROPEAN PATENT SPECIFICATION

(11) **EP 3 282 838 B1**
(45) Date of publication and mention of the grant of the patent: **18.12.2019**
(21) Application number: 16723645.4
(22) Date of filing: 15.04.2016
(51) Int. Cl.: A01M 21/04

(54) **HANDHELD DEVICE**
TRAGBARE VORRICHTUNG
DISPOSITIF PORTATIF

(30) Priority: 15.04.2015 DK 201500232
(43) Date of publication of application: 21.02.2018
(73) Proprietor: Dagato ApS, 9520 Skørping (DK)
(72) Inventor: PETERSEN, Lars-Mikkel Mørup, 9520 Skørping (DK)
(74) Representative: Høyer, Michael
(86) International application number: PCT/DK2016/000015
(87) International publication number: WO 2016/165717

(56) References cited:
- WO-A1-2014/110634
- AU-B2- 673 075
- US-A- 4 716 677
- US-A- 4 803 801
- US-A- 5 499 474
- US-A1- 2011 030 272

## Description

### Technical field

The present invention relates to a device and its use for manual application of chemicals such as herbicides to a plant structure such as a leaf.

The devices of prior art for manual application of chemicals such as a herbicide to a plant structure comprise both solutions where the user stands in an up-right position and to simple hand held devices. Solutions have been disclosed that aims to make it easy for the user to apply herbicide to undesired plants and avoid applying it to desired plants without a too large waste. The chemical is applied by forcefully gripping around a plant structure with a pad of the applicator device. The pad is configured to contain the liquid and to enable proper contact between the foliage and the pad such that the gripping pressure is sufficient to release the liquid on the targeted plant structure surface. Further if a liquid supply is provided it is either from a separate reservoir, or via a supply line to an exterior supply reservoir.

US4716677 shows several examples of such hand held devices. One device includes pads mounted on opposing distal portions of pincers. The solution features a porous applicator pad or sponge carrying a liquid herbicide. A minor amount of liquid may be stored inside portions of the pincers.

It is proposed to taper the distal portions so that the amount released may be controlled by controlling the area of applicator surface exposed to a desired plant structure but also to control the clamping pressure thereby controlling the amount of liquid herbicide released by the compression of the sponge.

The amount of herbicide applied depends on the amount of herbicide remaining in the sponge as the amount remaining decreases upon use.

To avoid this, the user has to dip the sponge frequently to assure that there is enough liquid herbicide for the next couple of applications.

This is, however, a major disadvantage. In addition, there is a risk that the container mistakenly will be emptied out on the soil. This is both environmentally and economically unacceptable.

Further, the solution does not solve the problem how to keep the applicator liquid amount at a constant, high level in the sponge, so that there is sufficient for a whole series of applications.

US-A-5 499 474 and WO-A1-2014/110634 each disclose a device in accordance with the preamble of claim 1 comprising manually operated valve means.

Thus, there is a need for a solution that overcomes the outlined problems. The solution need to be both economically and more environmentally acceptable, and easy to use.

### Summary of the invention

One object of the invention is to provide a solution which must secure that there is a more constant high amount of liquid available for each application in either more or longer series of applications.

Another object of the invention is to provide a solution that is economically and environmentally acceptable. The solution should not be based on a dipping of the applicator zones in a container with applicator liquid as there is a significant risk of emptying out the herbicide liquid on the soil.

The problems are solved by the solution according to claim 1 of the present invention. Provided is a hand held device for applying a liquid to a plant structure such as a leaf. The hand held device has tongs structure comprising at least two legs connected at a base terminus, and provides an open end for clamping a targeted part of a plant structure between the tongs leg working ends. At least one of said legs has a reservoir or is being in fluid connection with an external to the hand held device arranged reservoir for a supply of application liquid such as a herbicide. In order to apply the herbicide the legs have application means affixed to each of said tongs leg working ends where at least one of said application means is in fluid communication with the reservoir of application liquid. The objects of the invention are solved by providing a solution where more liquid is provided in a more constant amount, though only when contact is provided between the applicator means and the foliage. It is achieved by that tactile valve function means is arranged between said reservoir and said application means or is integrated into or protruding on the surface of said application means. This may provide liquid only upon clamping the applications means together. The application means may be pads or sponges. The application means transfer its obtained liquid to a plant structure situated between the working ends. The solution of the invention is of the type having a reservoir, which may be inside the device itself. Preferably, when the device is made from resilient material the pairs of tongs are apart so that no liquid is leaking.

The wording "tongs structure" should not be understood as limiting the invention to a structure with two or more legs and two or more arms. As shown in the drawing, the wording also includes a pincer- or tweezers- structure with two or more legs. For a pincer or tweezers the legs also form the arms.

In an embodiment, the "tongs structure" is constructed having two leg or arm members forming individual parts, where the parts are mutually pivotable mounted in one end of the members and supplied with a spring arranged in such a way as putting a force into opening the "tongs structure" in such a way that when in a relaxed state where the device is not in use, the application means are not pressed together.

Preferentially, the reservoir volume inside the tongs legs may extend to a minor or major part of the inside of at least one of the tongs legs, but it is recommended to avoid dead volumes, where liquid may enter and stay. Liquid may enter during refilling, e.g. part of the refilled liquid may enter a cavity, which may not be emptied through the valve during use.

In an embodiment, the reservoir is prefilled with the liquid and the reservoir is sealed and cannot be refilled.

In another embodiment, the device is adapted for being refillable. For refill, the reservoir of the device has an opening that may be equipped with a closure. The opening could be a neck with a thread. The closure could be a screw cap or cover that can be detached in order to open for the refill of liquid into the reservoir and then subsequently prior to use attach in order to seal the reservoir. More expediently, the handheld device comprises a cover, said cover being adapted to form a closure over the opening for refilling said liquid into said reservoir, said cover is especially adapted to be removed to allow a refilling and to seal the opening when placed in its closed position.

The refill may take place with the device standing in a vertical position, which will be facilitated if the device has a flat terminus. However, depending on the position of the refill opening, a supporting structure can be formed for achieving a stable position of the device during refill. A part of the body of the device may form a planar surface adapted to put the device in a stable position such that a screw cap may be safely taken off, and the reservoir refilled without wasting said liquid upon refilling. In a further embodiment the supporting structure can be an accessory in form of a cap or closure that receives the application area and serves as a shield against leaking of remaining liquid from the application pad/s.

In an embodiment, the device includes an optional further second reservoir with an opening that is adapted to fit the opening on the first reservoir, the opening on the first reservoir which is intended for replenishing or refilling the liquid. In an appreciated embodiment, the openings are formed as counterparts in such a way that when mutually connected no liquid can be leaked out of the device. However, liquid can flow through the connection between the openings that serves as a pathway between the first reservoir and the further second reservoir. The further second reservoir thus enlarges the total reservoir volume in order to extend the operating time of the device before a refilling is necessary. The further second reservoir can be mounted when the liquid in the first reservoir is used up, and thus in an easy way refill the first reservoir. If the user so wishes, the further second reservoir can be detached when the liquid has been passed into the first reservoir. It is recommended to refit the closure on the first reservoir in order not to spill the liquid.

For the sake of completeness, it has to be understood, that the further second reservoir can be attached directly to the first reservoir or remote where the liquid can be supplied via a tube especially adapted for the purpose, the tube in an first end being adapted to fit the opening in the first reservoir and in a second end being adapted to fit the opening on the second reservoir. If the second reservoir is designed voluminous for carrying a large amount of liquid it can be adapted to be carried on a body part of the user such as an arm or on the front or at the back at the user. In an appreciated embodiment, the second reservoir can be designed as a backpack.

The flow of liquid from the reservoir to the application means is obtained where the tactile valve function means further includes opening means. These opening means opens the valve when the leg working ends are pressed together to allow a flow from the reservoir through the valve to the application means. More specifically the tactile valve function means further includes opening means arranged in such a way that when the tongs leg working ends are being clamped together, the opening means are configured to open the valve so as to provide an opening for the flow of liquid out of the reservoir through the valve.

The tactile valve function means further comprise opening means which closes the valve when the leg working ends are not pressed together to stop a flow from the reservoir through the valve to the application means. More specifically the opening means arranged in such a way that when the tongs leg working ends are not being clamped together, the opening means are configured to close the valve.

One embodiment of the device has application means which are blocks affixed to said working ends, where said blocks' surface is formed by or comprises a material having a flexible porous structure, such as a resilient foam or sponge. There is a fluid communication between the resilient foam material or sponge to the reservoir of application fluid. The flexible porous structure or sponge is adapted to contain a high amount of liquid. If the applicator is gripping around a plant structure the tactile functions means are activated and liquid will be released to the resilient material or sponge of the applications means. If the device is made from a resilient material, when not in use, the working ends will be apart and the tactile valve function means will secure that the liquid is sealed inside the device. Another embodiment is a device where the application means are rollers adapted to rotate on a rotation axis, comprising a pad, such as a sponge, where said pad of at least one of said rollers is in fluid communication with said tactile valve function means either directly by the contact between the roller pads and the tactile valve function means or optionally from said pads via penetration holes of a roller surface and the inner side of a corresponding rotation axis of a roller and its anchoring means to the tactile valve function means.

One or more, preferably two rollers, may be configured to have their rotation axis parallel to each other each at one of the leg working ends. This configuration is optimal for contacting a first part of plant structure and treating the remaining part of the plant structure in a direction having an angle perpendicular to the leg working ends. However, the rotation axises of the two rollers may also be placed in an angle to the leg working ends.

The ends of the rotation axises may be anchored directly to the device provided that the tactile valve function means are configured to work by a compression of the foam structure of the rollers. Alternatively, the ends of at least one rotation axis are each attached to flexible anchoring means such as a spring or a damper mounted in for example two small groves in the device. In this way a simple and solid construction is obtained. The tactile valve function means may then be configured to allow a flow when the legs working ends and thus the rollers are pressed together around an object such as a leaf because the roller then moves towards the body of the leg working end to which the roller is flexibly mounted. Opening means of the tactile valve function means allow liquid to flow to the pad. More specifically tactile opening means is arranged to be extending towards the pad, or arranged at the rotation axis, adapted to be activated upon a force put on the rotation axis.

In another embodiment, the application means are at least one ball and its circumferential clamp. The ball is held in position by the circumferential clamp like in a roll-on deodorant, and functions as the tactile valve functions means. It has a space between the clamp and the ball which is in fluid communication with a reservoir. The space has a volume of liquid which is applied to a plant structure when the ball rolls. The solution is characterised by that the amount of liquid applied to a plant structure will be the same at each application independently of the contact pressure. More specifically the ball, when pressed against the plant structure and pad, will open the valve and an amount of liquid product will be released.

In yet another embodiment, the application means are at least one wheel, adapted to be affixed to a working end, having flexible lamellae, anchored in one end to the centre of the wheel, and comprising in the other end a pad, such as a sponge, optionally with openings parallel to the lamella. The lamellae are in fluid communication with the reservoir and are the tactile function means. They receive liquid between the lamellae in a position inside the body of the legs working ends and release liquid by being bent and compressed against a neighbouring lamella by a pressure from clamping a leaf. The wheel preferable turns in a plane perpendicular to surface of application and the circular plane of the wheel only have to be perpendicular to the surface of application. Preferably the opposite leg working end has no wheel but optionally a sponge or another suitable surface for clamping foliage.

For some plant varieties the chemical liquid herbicide is more effective and a better result can be achieved if the plant structure is treated in a way where small openings or cuts are made in the surface of the plant structure. The scrapes or wounds in the plant structure enables a better absorption of the active ingredients. Thus, in yet another embodiment the application means of the explained embodiments formed by blocks, sponges, rollers, balls are further equipped with means for penetrating the plant structure. The penetrating means include cutters, spikes, nails, blades or the like that can serve as a tool for making an opening in the plant structure.

In an embodiment the means for penetrating the plant structure is covered by the application means and are only appearing when a predetermined pressure is put on the application means. This feature is highly appreciated since the pressure put on the application means determines if the penetrating means are active or not. The user can with a hard pressure use the penetrating means for wounding the plant structure and when only a soft pressure is put on the application means the penetrating means are covered and not active. In a further embodiment, the penetrating means are retractable in such a way that they can be pivoted out of a cover, possibly arranged within the application means, and thus be active and able to wound the plant structure or can be retracted into the cover where they are inactive. It has to be understood that the penetrating means can be arranged integrated with the application means or be an independent construction arranged on the device at a suitable place where it can treat the plant structure with the desired wounds for better absorption of the herbicide.

The tactile valve functions means may optionally in the first and second embodiment be a spring valve or a bladder valve.

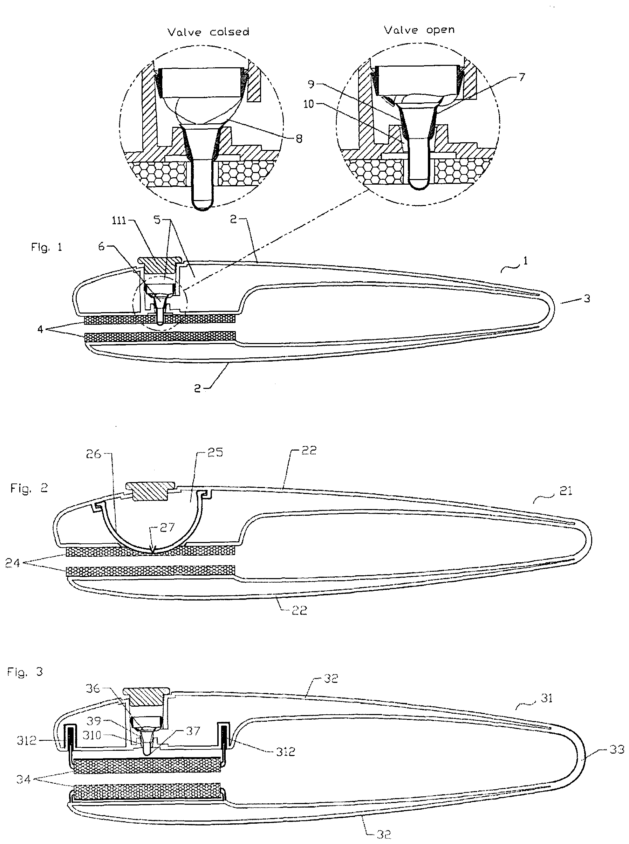

The spring may be a conventional spring valve. A preferred spring valve is of the type in Fig.1. The spring of the valve form at least one or a number of spirals, the spring being anchored to the reservoir in one end and in the other end to a conical solid cylinder. It fits into a conical flange made in the wall of the device. The conical flange forms an opening in the device that leads to the reservoir. The valve leads liquid to the application means, when openings means here the conical solid cylinder is pushed in, providing a space between the conical surfaces facilitating liquid to flow to the application surface.

The bladder valve functions like the first valve of a diaphragm pump. A slice in the bladder functions as the opening means. When pressure is applied to the slice the slice cannot seal the surface of the bladder and liquid in the bladder will flow out. The bladder may at the same time work also as a reservoir. In an embodiment, the tactile valve function means is the outlet valve of a tactile bladder valve which may be a bladder comprising natural or artificial rubber as e.g. latex with a non-return valve for effective ejecting liquid to said application means and to said leaf when said bladder is pressed and which bladder optionally has another non-return valve for sucking liquid from said reservoir when released

The device is especially suitable for application of a liquid herbicide to a plant structure such as a leaf. The preferred liquid chemical comprises glyphosate (N-(phosphonomethyl)glycine). Other suitable chemical liquids are liquid wax agents or agents based on paraffin oils against lustre, insecticides, and fertilizers.

For the sake of completeness, it has to be understood, that the device can be engineered especially for the application of herbicide to a specific plant structure. Thus, the size of the device, hereunder the size of the pad can vary from a few millimetres to several centimeters. The range could practically be from 2 millimeters to 50 centimeters. The small size is advantageous for application to plant varieties with small structures and the large size is advantageous for application to plant varieties with large structures such as e.g. palm leaves.

Even though the invention has been explained using a single valve and in multiple embodiments, the wording "tactile valve means" should be understood as at least one valve in such a way that more valves, in series or parallel, and of different shapes and types, could be arranged on the device in order to serve to supply an amount of liquid on demand.

### Brief description of drawings

Fig.1 illustrates an embodiment of the hand held device where the leg working ends have application means which are blocks having a porous structure and a spring valve. The spring valve has three resilient strips which works as a spring fixed to a conical (solid) cylinder terminating in a solid pin. Fig. 1 illustrates also the spring valve of the embodiment of in exploded view.
Fig.2 illustrates a hand held device that is of the same type as the one in Fig.1 except for that the spring valve is a bladder valve.
Fig. 3 illustrates an embodiment of the hand held device where the leg working ends have application means, which are rollers with a pad having a porous structure, and a spring valve. The spring valve has three resilient strips which work as a spring fixed to a solid conical cylinder.
Fig.4 illustrates a hand held device that is of the same type as the one in Fig.3 except for that the spring valve is replaced by a bladder valve.
Fig. 5 illustrates a hand held device and a cap forming a closure that receives the application area and serves as a shield against leaking of remaining liquid from the application pad/s.
Fig. 6 illustrates a hand held device with focus on the tongs structure with a spring arranged in one end for avoiding the application means to be pressed together when the device is not in use.

### Detailed description

Fig. 1 illustrates an embodiment of the present invention where the hand held device (1) comprises a tongs structure comprising two legs (2) connected at a base terminus (3) providing an open end for clamping a targeted part of a plant structure between the tongs leg working ends. Application means (4) are affixed to the tongs leg working ends. One of the application means (4) (the upper, see figure) is in fluid communication with the reservoir (5) of application liquid. Inside the corresponding leg working end of the device there is a compartment (5) which functions as a reservoir (5) for containing liquid for the manual application.
In order to supply the liquid only upon use the device (1) has tactile valve function means shown in the form of a spring valve (6) configured between the reservoir (5) and the application means (4). In the present embodiment inside the reservoir (5), the spring valve (6) is fixed to wall structures of the device (1). The opening means (7), which ends in a solid pin, is fixed via its three strips (8) to an interior wall part of the device (1). Its conical opening part (9) fits a conical flange (10) (see also the exploded view in Fig. 1) of the wall of the device facing the corresponding application means (4). The pin is integrated into or protruding on the surface of the application means (4). When the opening part, the solid pin, is pressed inwards while compressing the leg working ends (2) e.g. around a plant structure there is created a fluid communication from the reservoir (5) to the application means (4) (the upper) via a space created between the flange of the conical opening part (9) of the opening means (7) and the conical flange (10) of the device facing the application means (4). When the leg working ends are apart e.g. as if the device (1) at the base terminus (3) is of a resilient material the space disappears. A removable lid or screw cap (111) is provided on the top of the reservoir (5).

Fig. 2 illustrates another embodiment of the present invention where a device of the type in Fig. 1 instead of a spring valve is configured with a bladder valve (26), which is also fixed to wall structures of the device (21). The reservoir (25) is the volume of the bladder if it is not enlarged to a part of the compartment confined by the wall of the device (21) (not shown). The slice (27) in the bottom of the bladder is the opening means (27). In this embodiment the application means (24) is also from a resilient foam structure, such as a sponge. When the slice (27) is pressed inwards upon clamping the leg working ends (22) around a plant structure the bladder valve material around the slice (27) is pressed apart providing an opening for liquid to flow to the application means (24). When the leg working ends (22) are not compressed around a plant structure, the slice (27) is closed and forms a firm continuous surface. This provides a sucking effect, which, however is equalised via a non-return valve e.g. above the liquid surface (not shown) with the surroundings outside the device (21).

Fig. 3 illustrates an embodiment of the hand held device (31) where the leg working ends (32) have application means (34), which are rollers (34) with a pad having a porous structure, which is fixed and configured to be a little distance apart to allow the rollers (34) to roll without gliding against the wall of the leg working ends (32). The roller of upper (see figure) leg working end (32) is mounted and adapted to move inwards against the opening means (37) of the tactile valve function means shown in the form of a spring valve (36) in a direction determined by the anchoring means which may be any flexible means, such as a spring (312) or damper. The application means (32) not mounted next to the spring valve (36) is anchored rigidly. In this embodiment the spring valve (36) is identical to the spring valve (6) in the embodiment of Fig.1. The pin (37) of the spring valve (36) touches the pad (sponge) on the upper roller (34) but is not pressed in when the device (31) is not in use. As the device (31) at the base terminus (33) in this embodiment also is made from a resilient material, the leg working ends (32) are apart when not in use. The leg working ends (32) are pressed together upon clamping around a plant structure whereby the roller (34) presses the pin (37) inwards facilitating a flow of liquid to the pad. The flexible nature or spring nature of the anchoring means (312) secure that the roller (34) is moved back to its relaxed position while the releasing of the clamping force applied to the leg working ends (32) moves them apart assisted by the resilient character of the terminal base (33).

At the same time the spring nature of the spring valve moves the flanges (39 and 310) (see also the exploded view in Fig. 1 where 9 and 10 correspond to 39 and 310) to meat and close the valve (36).

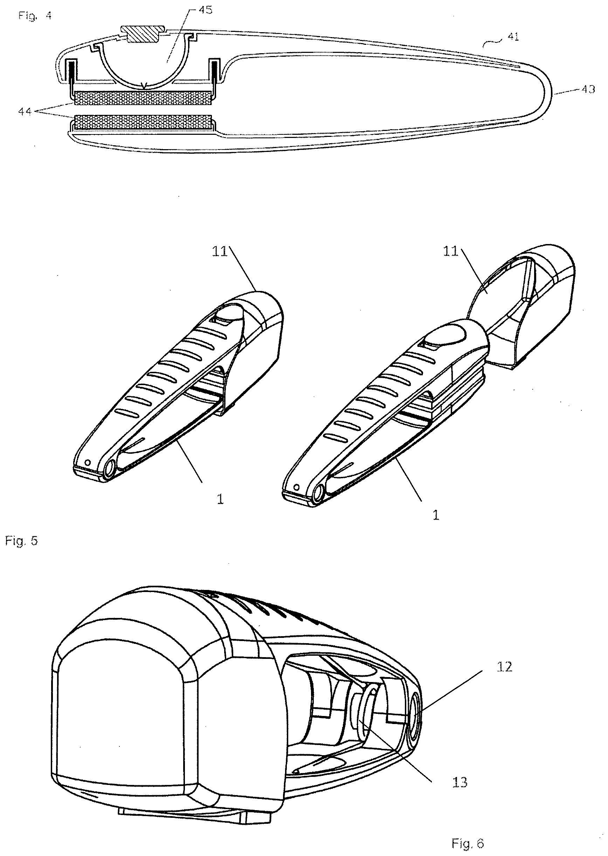

Fig.4 illustrates a hand held device (41) that is of the same type as the one in Fig.3. The application means are rollers (44) but the tactile valve function means is a bladder valve (45) as of the embodiment of Fig. 2. The terminal base (43) is made from a resilient material. In relaxed position the surface of the bladder valve (45) is separated from (not shown) or just touches the surface of the pad so there is (just a little) or no idle distance before the bladder valve is pressed inwards upon gripping with the device.

Fig. 5 illustrates a version of the hand held device (1) fully engineered and ready for mass production. In order to protect the user against leaking when not in use a protective cap (11) or closure is formed as a counterpart for receiving the application end of the hand held device. Fig 5, shows the hand held device with or without the cap attached.

Fig. 6 illustrates an embodiment of the hand held device, where the "tongs structure" is constructed having two leg or arm members forming individual parts. The two parts are mutually pivotable mounted in a hinge (12) in one end of the members and supplied with a spring (13) arranged in such a way as to putting a force into opening the "tongs structure". Hereby is achieved that when in a relaxed state where the device is not in use, the application means are not pressed together. Thus the device is ready for use and insertion of a plant structure to be treated without any exercise for opening the device. Further the valve is not activated and the liquid supply is cut.

## Claims

1. Hand held device for applying a liquid to a plant structure such as a leaf, the hand held device having tongs structure comprising:
- at least two legs connected at a base terminus, and providing an open end for clamping a targeted part of a plant structure between said tongs leg working ends;
- at least one of said legs having a reservoir or being in fluid connection with an external to the hand held device arranged reservoir;
- application means affixed to at least one of said tongs leg working ends;
- at least one of said application means is in fluid communication with said reservoir of application liquid,
**characterized by that**
tactile valve function means is placed between said reservoir and said application means or is integrated into or protruding on the surface of said application means and where
the tactile valve function means further includes opening means arranged in such a way that when the tongs leg working ends are being clamped together, the opening means are configured to open the valve so as to provide an opening for the flow of liquid out of the reservoir through the valve and where
the opening means are arranged in such a way that when the tongs leg working ends are not being clamped together, the opening means are configured to close the valve.

2. Hand held device according to claim 1,
**characterized by that**
the application means are blocks affixed to said working ends, where said blocks' surface is formed by a material having a flexible porous structure, such as a resilient foam or sponge.

3. Hand held device according to claim 1,
**characterized by that**
the application means are rollers adapted to rotate on a rotation axis, comprising a pad, such as a sponge, where said pad of at least one of said rollers is in fluid communication with said tactile valve function means optionally via penetration holes of said roller surface and the inner side of said rotation axis of said roller and where tactile opening means is arranged to be extending towards said pad, or arranged at said rotation axis, adapted to be activated upon a force put on said rotation axis.

4. Hand held device according to claim 1,
**characterized by that**
the application means are at least one ball and its circumferential clamp, the ball held in position by the clamp and having space between the ball and the clamp for being in fluid communication with the reservoir.

5. Hand held device according to any of the claims 1 to 4,
**characterized by that**
the application means comprises means for penetrating the plant structure, the penetrating means including one or more of cutters, spikes, nails, blades or the like that can serve as a tool for making an opening in the plant structure.

6. Hand held device according to claim 5,
**characterized by that**
the hand held device includes a cover, possibly arranged with the application means or being an independent construction, where the penetrating means are retractable in such a way that they can be pivoted out of a cover and be active and able to wound the plant structure or can be retracted into the cover where they are inactive.

7. Hand held device according to any of the claims 1 to 6,
**characterized by that**
the tactile valve function means is a tactile spring valve.

8. Hand held device according to claim 7,
**characterized by that**
the tactile valve function means comprises a spring and a conical solid cylinder with a matching conical flange formed in the wall of the device between the reservoir and the outside, the conical flange forming an opening, where the spring of the tactile valve form a number of spirals anchored to the reservoir in one end and in the other end anchored to the conical solid cylinder.

9. Hand held device according to any of the claims 1 to 7,
**characterized by that**
said tactile valve function means is the outlet valve of a tactile bladder valve which may be a bladder comprising natural or artificial rubber as e.g. latex with a non-return valve for effective ejecting liquid to said application means and to said leaf when said bladder is pressed and which bladder optionally has another non-return valve for sucking liquid from said reservoir when released.

10. Hand held device according to any of the claims 1 to 9,
**characterized by that**
the device comprises a cover, said cover being adapted to form a closure over the opening for refilling said liquid into said reservoir, said cover is especially adapted to be removed to allow a refilling and to seal the opening when placed in its closed position.

11. Hand held device according to any of the claims 1 to 10,
**characterized by that**
the device comprises a supporting structure in form of a planar surface formed on at least a part of the body.

12. Hand held device according to any of the claims 1 to 11,
**characterized by that**
the device comprises a cap forming a closure that receives the application area of the hand held device and serves as a shield against leaking of remaining liquid from the application pad/s

13. Hand held device according to any of the claims 1 to 12,
**characterized by that**
the device includes an optional further second reservoir with an opening that is adapted to fit the opening on the first reservoir for replenishing or refilling the liquid.

14. Hand held device according to any of the claims 1 to 13,
**characterized by that**
the device includes a reservoir prefilled with the liquid where the reservoir is sealed and cannot be refilled.

15. Use of a hand held device according to any of the claims 1 to 14 for application of a liquid chemical and/or for application of glyphosate.

## Patentansprüche

1. Tragbare Vorrichtung zum Anwenden einer Flüssigkeit auf eine Pflanzenstruktur wie ein Blatt, wobei die tragbare Vorrichtung eine Zangenstruktur aufweist, umfassend:
- mindestens zwei mit einem Basisendpunkt verbundene Beine, und bereitstellend ein offenes Ende zum Festklemmen eines Zielteils einer Pflanzenstruktur zwischen den Zangenbeinarbeitsenden;
- wobei mindestens eines der Beine einen Behälter aufweist oder sich in einer Fluidverbindung mit einem außerhalb der tragbaren Vorrichtung angeordneten Behälter befindet;
- Anwendungsmittel, die an mindestens einem der Zangenbeinarbeitsenden befestigt sind;
- wobei mindestens eines der Anwendungsmittel in einem Fluidaustausch mit dem Behälter von Anwendungsflüssigkeit steht,
**dadurch gekennzeichnet, dass**
ein Tastventilfunktionsmittel zwischen dem Behälter und dem Anwendungsmittel platziert ist oder in die Oberfläche des Anwendungsmittels integriert ist oder an ihr vorsteht, und wobei
das Tastventilfunktionsmittel ferner Öffnungsmittel beinhaltet, die so angeordnet sind, dass dann, wenn die Zangenbeinarbeitsenden zusammengeklemmt werden, die Öffnungsmittel dazu ausgelegt sind, das Ventil zu öffnen, um eine Öffnung für den Strom von Flüssigkeit durch das Ventil aus dem Behälter bereitzustellen, und wobei
die Öffnungsmittel so angeordnet sind, dass dann, wenn die Zangenbeinarbeitsenden nicht zusammengeklemmt sind, die Öffnungsmittel dazu ausgelegt sind, das Ventil zu schließen.

2. Tragbare Vorrichtung nach Anspruch 1,
**dadurch gekennzeichnet, dass**
die Anwendungsmittel Blöcke sind, die an den Arbeitsenden befestigt sind, wobei die Oberfläche der Blöcke durch ein Material ausgebildet ist, das eine flexible poröse Struktur aufweist, beispielsweise ein elastischer Schaum oder Schwamm.

3. Tragbare Vorrichtung nach Anspruch 1,
**dadurch gekennzeichnet, dass**
die Anwendungsmittel Rollen sind, die dazu ausgelegt sind, sich auf einer Rotationsachse zu drehen, umfassend ein Polster, beispielsweise einen Schwamm, wobei das Polster von mindestens einer der Rollen in einem Fluidaustausch mit dem Tastventilfunktionsmittel steht, optional über Durchgangslöcher der Rollenoberfläche und der Innenseite der Rotationsachse der Rolle, und wobei das Tastöffnungsmittel angeordnet ist, um sich in Richtung des Polsters zu erstrecken, oder an der Rotationsachse angeordnet ist, dazu ausgelegt, bei einer auf die Rotationsachse angewendeten Kraft aktiviert zu werden.

4. Tragbare Vorrichtung nach Anspruch 1,
**dadurch gekennzeichnet, dass**
die Anwendungsmittel mindestens eine Kugel und ihre Umfangsklemme sind, wobei die Kugel von der Klemme in Position gehalten wird und einen Raum zwischen der Kugel und der Klemme aufweist, um in Fluidaustausch mit dem Behälter zu sein.

5. Tragbare Vorrichtung nach einem der Ansprüche 1 bis 4,
**dadurch gekennzeichnet, dass**
die Anwendungsmittel Mittel zum Penetrieren der Pflanzenstruktur umfassen, wobei die Penetrierungsmittel eines oder mehrere von Schneidemessern, Nadeln, Nägeln, Klingen oder Ähnlichem umfassen, was als ein Werkzeug zum Herstellen einer Öffnung in der Pflanzenstruktur dienen kann.

6. Tragbare Vorrichtung nach Anspruch 5,
**dadurch gekennzeichnet, dass**
die tragbare Vorrichtung eine Abdeckung beinhaltet, die möglicherweise mit dem Anwendungsmittel angeordnet oder eine unabhängige Konstruktion ist, wobei die Penetrationsmittel so zurückziehbar sind, dass sie aus einer Abdeckung geschwenkt werden können und aktiv und in der Lage sind, die Pflanzenstruktur zu verwunden, oder in die Abdeckung zurückgezogen werden können, wo sie inaktiv sind.

7. Tragbare Vorrichtung nach einem der Ansprüche 1 bis 6,
**dadurch gekennzeichnet, dass**
das Tastventilfunktionsmittel ein Tastfederventil ist.

8. Tragbare Vorrichtung nach Anspruch 7,
**dadurch gekennzeichnet, dass**
das Tastventilfunktionsmittel eine Feder und einen konischen massiven Zylinder mit einem passenden konischen Flansch, ausgebildet in der Wand der Vorrichtung zwischen dem Behälter und der Außenseite, umfasst, wobei der konische Flansch eine Öffnung ausbildet, wobei die Feder des Tastventils eine Anzahl von Spiralen ausbildet, die an dem Behälter in einem Ende verankert sind und in dem anderen Ende an dem konischen massiven Zylinder verankert sind.

9. Tragbare Vorrichtung nach einem der Ansprüche 1 bis 7,
**dadurch gekennzeichnet, dass**
das Tastventilfunktionsmittel das Auslassventil eines Tastbalgventils ist, das ein Balg sein kann,
umfassend natürlichen oder künstlichen Kautschuk wie beispielsweise Latex mit einem Rückschlagventil zum effektiven Ausgeben von Flüssigkeit an das Anwendungsmittel und das Blatt, wenn der Balg zusammengedrückt wird, und wobei der Balg optional ein weiteres Rückschlagventil aufweist, um bei Freigabe Flüssigkeit aus dem Behälter zu saugen.

10. Tragbare Vorrichtung nach einem der Ansprüche 1 bis 9,
**dadurch gekennzeichnet, dass**
die Vorrichtung eine Abdeckung umfasst, wobei die Abdeckung dazu ausgelegt ist, einen Verschluss über der Öffnung zum Nachfüllen der Flüssigkeit in den Behälter auszubilden, wobei die Abdeckung insbesondere dazu ausgelegt ist, entfernt zu werden, um ein Nachfüllen zu gestatten und um die Öffnung abzudichten, wenn sie in ihrer geschlossenen Position platziert ist.

11. Tragbare Vorrichtung nach einem der Ansprüche 1 bis 10,
**dadurch gekennzeichnet, dass**
die Vorrichtung eine Stützstruktur in Form einer ebenen Oberfläche umfasst, die auf mindestens einem Teil des Körpers ausgebildet ist.

12. Tragbare Vorrichtung nach einem der Ansprüche 1 bis 11,
**dadurch gekennzeichnet, dass**
die Vorrichtung eine Kappe umfasst, die einen Verschluss ausbildet, der den Anwendungsbereich der tragbaren Vorrichtung aufnimmt und als eine Abschirmung gegen Undichtigkeit verbleibender Flüssigkeit aus dem Anwendungspolster/den Anwendungspolstern dient.

13. Tragbare Vorrichtung nach einem der Ansprüche 1 bis 12,
**dadurch gekennzeichnet, dass**
die Vorrichtung einen optionalen weiteren zweiten Behälter mit einer Öffnung beinhaltet, die dazu ausgelegt ist, zu der Öffnung des ersten Behälters zu passen, um die Flüssigkeit nachzugießen oder nachzufüllen.

14. Tragbare Vorrichtung nach einem der Ansprüche 1 bis 13,
**dadurch gekennzeichnet, dass**
die Vorrichtung einen Behälter beinhaltet, der mit der Flüssigkeit vorgefüllt ist, wobei der Behälter versiegelt ist und nicht nachgefüllt werden kann.

15. Verwenden einer tragbaren Vorrichtung nach einem der Ansprüche 1 bis 14 zum Anwenden einer flüssigen Chemikalie und/oder zum Anwenden von Glyphosat.

## Revendications

1. Dispositif portatif pour appliquer un liquide sur une structure de plante telle qu'une feuille, le dispositif portatif ayant une structure de pince comprenant:
- au moins deux branches reliées au niveau d'une terminaison de base, et fournissant une extrémité ouverte pour serrer une partie ciblée d'une structure de plante entre lesdites extrémités de travail des branches de pince;
- au moins l'une desdites branches ayant un réservoir ou étant en connexion fluidique avec un réservoir externe au réservoir disposé sur le dispositif portatif;
- des moyens d'application fixés à au moins l'une desdites extrémités de travail des branches de pince;
- au moins l'un desdits moyens d'application est en communication fluidique avec ledit réservoir de liquide d'application,
**caractérisé en ce que**
un moyen à fonction de valve tactile est placé entre ledit réservoir et ledit moyen d'application ou est intégré ou fait saillie sur la surface dudit moyen d'application et où
le moyen à fonction de valve tactile comprend en outre des moyens d'ouverture agencés de telle sorte que, lorsque les extrémités de travail des branches de pince sont serrées ensemble, les moyens d'ouverture sont configurés pour ouvrir la valve afin de fournir une ouverture pour l'écoulement du liquide hors du réservoir à travers la valve et où
les moyens d'ouverture sont disposés de telle sorte que lorsque les extrémités de travail des branches de pince ne sont pas serrées ensemble, les moyens d'ouverture sont configurés pour fermer la valve.

2. Dispositif portatif selon la revendication 1, **caractérisé en ce que** les moyens d'application sont des blocs fixés auxdites extrémités de travail, où la surface desdits blocs est formée par un matériau ayant une structure poreuse flexible, telle qu'une mousse ou une éponge élastique.

3. Dispositif portatif selon la revendication 1, **caractérisé en ce que** les moyens d'application sont des rouleaux adaptés pour tourner sur un axe de rotation, comprenant un tampon, tel qu'une éponge, ledit tampon d'au moins l'un desdits rouleaux étant en communication fluidique avec ledit moyen à fonction de valve tactile, éventuellement par des trous de pénétration de ladite surface du rouleau et du côté intérieur dudit axe de rotation dudit rouleau et un moyen d'ouverture tactile étant agencé pour être étendu vers ledit tampon, ou agencé sur ledit axe de rotation, adapté pour être activé par une force appliquée sur ledit axe de rotation.

4. Dispositif portatif selon la revendication 1, **caractérisé en ce que** les moyens d'application sont au moins une bille et son collier périphérique, la bille étant maintenue en position par le collier et ayant un espace entre la bille et le collier pour être en communication fluide avec le réservoir.

5. Dispositif portatif selon l'une quelconque des revendications 1 à 4, **caractérisé en ce que** les moyens d'application comprennent des moyens pour pénétrer dans la structure de plante, les moyens de pénétration comprenant un ou plusieurs dispositifs de coupe, pointes, clous, lames ou analogues qui peuvent servir d'outil pour faire une ouverture dans la structure de plante.

6. Dispositif portatif selon la revendication 5, **caractérisé en ce que** le dispositif portatif comprend un couvercle, éventuellement agencé avec les moyens d'application ou étant une construction indépendante, dans lequel les moyens de pénétration sont rétractables de telle manière qu'ils peuvent pivoter hors d'un couvercle et être actifs et capables de provoquer une lésion sur la structure de plante ou peuvent être rétractés dans le couvercle où ils ne sont pas actifs.

7. Dispositif portatif selon l'une quelconque des revendications 1 à 6, **caractérisé en ce que** la fonction de valve tactile est une valve à ressort tactile.

8. Dispositif portatif selon la revendication 7, **caractérisé en ce que** le moyen à fonction de valve tactile comprend un ressort et un cylindre plein conique avec une bride conique correspondante formée dans la paroi du dispositif entre le réservoir et l'extérieur, la bride conique formant une ouverture, où le ressort de la valve tactile forme plusieurs spirales ancrées au réservoir à une extrémité et à l'autre extrémité ancrées au cylindre plein conique.

9. Dispositif portatif selon l'une quelconque des revendications 1 à 7, **caractérisé en ce que** ledit moyen à fonction de valve tactile est la valve de sortie d'une valve à vessie tactile qui peut être une vessie comprenant du caoutchouc naturel ou artificiel comme par exemple du latex avec une valve anti-retour pour éjecter efficacement du liquide vers lesdits moyens d'application et vers ladite feuille lorsque ladite vessie est pressée, laquelle vessie possède éventuellement une autre valve anti-retour pour aspirer du liquide dudit réservoir quand il est libéré.

10. Dispositif portatif selon l'une quelconque des revendications 1 à 9, **caractérisé en ce que** le dispositif comprend un couvercle, ledit couvercle étant adapté pour former une fermeture au-dessus de l'ouverture pour le remplissage dudit liquide dans ledit réservoir, ledit couvercle étant spécialement adapté pour être enlevé pour permettre un remplissage et pour sceller l'ouverture une fois placé dans sa position fermée.

11. Dispositif portatif selon l'une quelconque des revendications 1 à 10, **caractérisé en ce que** le dispositif comprend une structure de support sous la forme d'une surface plane formée sur au moins une partie du corps.

12. Dispositif portatif selon l'une quelconque des revendications 1 à 11, **caractérisé en ce que** le dispositif comprend un capuchon formant une fermeture qui reçoit la zone d'application du dispositif portatif et sert de protection contre les fuites de liquide restant par le ou les tampons d'application.

13. Dispositif portatif selon l'une quelconque des revendications 1 à 12, **caractérisé en ce que** le dispositif comprend un second réservoir supplémentaire optionnel avec une ouverture qui est conçue pour s'adapter à l'ouverture du premier réservoir pour remplir ou recharger le liquide.

14. Dispositif portatif selon l'une quelconque des revendications 1 à 13, **caractérisé en ce que** le dispositif comprend un réservoir prérempli avec le liquide dans lequel le réservoir est scellé et ne peut pas être rechargé à nouveau.

15. Utilisation d'un dispositif portatif selon l'une quelconque des revendications 1 à 14 pour l'application d'un produit chimique liquide et/ou pour l'application de glyphosate.
